# EUROPEAN PATENT SPECIFICATION

(11) **EP 2 873 883 B1**
(45) Date of publication and mention of the grant of the patent: **21.02.2018**
(21) Application number: 14193329.1
(22) Date of filing: 14.11.2014
(51) Int. Cl.: F16C 33/12, F16C 33/24, F16C 31/02, F16C 33/20, C23C 30/00, C23C 2/12, C23C 4/08, E04H 9/02

(54) **Sliding bearing for structural engineering**
Gleitlager für Strukturelle Verarbeitung
Plaier lisse pour construction civile

(30) Priority: 18.11.2013 IT MI20131907
(43) Date of publication of application: 20.05.2015
(73) Proprietor: Cave S.r.l., 20010 Canegrate (MI) (IT)
(72) Inventor: Muroni, Alessandro, 21052 Busto Arsizio VA (IT); Quaglini, Virginio, 27012 Certosa di Pavia PV (IT)
(74) Representative: Spina, Alessandro

(56) References cited:
- EP-A1- 2 179 189
- EP-A1- 2 198 099
- EP-A2- 0 126 633
- EP-A2- 0 307 028
- FR-A1- 2 373 355
- US-A- 3 343 930

## Description

The present invention generally relates to sliding bearings for structural engineering applications and in particular to a sliding bearing for structures such as bridges and buildings.

Sliding bearings are generally used in the construction of civil, industrial and road structures, such as bridges and roads and rail viaducts. Sliding bearings define between two or more parts of a structure shoe, hinge constraints, as well as combinations thereof. The function of sliding bearings is to allow parts of the structure to make relative movements that are typically translations and/or rotations, either under normal operating conditions, wherein these movements are caused by shrinkage of building materials, thermal effects, as well as by traffic, wind and use of the structure, or in case of seismic events.

A sliding bearing generally comprises at least one first component and at least one second component made of steel that are operatively connected to one another and configured to withstand a vertical load, as well as at least one pair of sliding surfaces arranged between the first and the second components so as to allow them to make relative movements and/or rotations. A pair of flat surfaces is typically used when it is necessary to allow relative translation movements along one or a number of directions parallel to the sliding surfaces, while a pair of curved surfaces is used when it is necessary to allow rotations about one or a number of axes.

One of the sliding surfaces is typically a plate made of a polymeric material mounted on one of the bearing components. In sliding bearings designed for geographical areas having no or a relatively poor seismicity, or more generally in sliding bearings that are not intended for use as anti-seismic supports featuring a high dissipative ability, the polymeric material surface is made of a low friction polymeric material. Polytetrafluoroethylene (PTFE) is the mainly used polymeric material for these applications, while ultra-high mega weight polyethylene (UHMWPE) and cast polyamide added with solid state lubricants have been suggested as alternative polymeric materials when sliding bearings are subject to specific operating conditions. A sliding bearing for structural engineering applications is disclosed i.e. in EP0126633. The sliding surface coupled to the sliding surface made of polymeric material is a mirror polished metal surface associated with the other component of the bearing. Typically a lubricant is also interposed between the two sliding surfaces of the bearing in order to further reduce the coefficient of friction.

The metal sliding surface is typically a plate of stainless steel having a thickness comprising between 1.5 and 3 mm. This configuration is widely used because stainless steel is a strong material sufficiently hard to withstand abrasion when coupled with a softer polymeric material. Stainless steel is also corrosion resistant and relatively easy to polish up to a roughness in the order of 1 µm, which allows to meet the requirements of the present standards and in particular those concerning the wear resistance of the pair of sliding surfaces; the wear resistance depends on the maximum obtainable sliding path in relation to design load conditions.

In the case of sliding bearings comprising convex or concave curved surfaces designed to allow rotations of a structure or a part thereof relative to a supporting plane, or having an anti-seismic function such as e.g. sliding pendulum bearings, the component intended to receive the stainless steel plate that forms the metal sliding surface is machined so as to obtain a convex or concave seat suitable to support the plate. The component that receives the stainless steel plate is typically made of carbon steel, that is a material having high toughness and mechanical strength, which allows to support high loads without being damaged or undergoing deformations that could compromise operation and service life of the bearing.

The plate of stainless steel, that has a flat shape, is plastically deformed by way of suitable molds or calendering operations depending on the required shape and curvature and is then mounted on the component of the bearing by bonding with adhesives, welding, or by way of screws, rivets and similar methods indicated in the technical standards of the field.

The rigidity and toughness of stainless steel do not generally allow to obtain a curvature that precisely corresponds to the curvature of the seat formed in the component of the bearing. During operation this causes contact problems between the two parts and thus stresses which are particularly concentrated in the connection areas between the stainless plate and the component of the bearing. Hence, there are increased risks of malfunction and damage of the bearing.

For the same reason, the curvature of the stainless steel plate that forms one of the two sliding surfaces may not exactly match the curvature of the polymeric material plate that forms the other sliding surface of the pair of sliding surfaces of the bearing. During operation this causes jamming and increased sliding resistance between the two surfaces. The resulting local overpressures on the sliding surface made of polymeric material lead to premature wear thereof.

The problem of the curvature of plates made of stainless steel is more felt in the case of curved surfaces having a small radius of curvature, or at least lower than 1000 mm.

Alternatively to the use of stainless steel plates, the present standards allow to manufacture bearing components made of aluminum or an alloy thereof so as to obtain the curved metal sliding surface. The metal sliding surface is formed on the face of the component intended to contact the polymeric material plate associated with the other component. This surface is suitably polished so as to obtain a surface roughness meeting the standard requirements.

It is known that aluminum has mechanical properties that are considerably lower than those of steel, therefore when employing aluminum the standards require a reduction of bearing the service life compared to the service life of a corresponding bearing provided with a stainless steel sliding surface. This reduction is based on the maximum permissible sliding path. According to the European standard EN 1337-2: 2004, regulating the use of bearings and related materials in building constructions, the sliding path is a fifth of the sliding path characterizing a stainless steel plate on equal polymeric material plate coupled thereto and operating conditions.

This alternative configuration of a sliding bearing is therefore disadvantageous from an economic point of view in terms of strength and service life of the bearing.

Still alternatively to the use of stainless steel plates for the manufacturing of curved metal sliding surface, the standards allow to form a chrome plating on the face of the component intended to contact the sliding surface made of polymeric material.

This configuration allows to solve the contact problems discussed above, because the sliding surface is formed directly on one of the components of the bearing, typically by numeric control machining and thus with a high degree of precision, and not mounted thereto. This also allows to solve the problems related to mechanical properties of the materials, because, as discussed above, the bearing components are typically made of carbon steel.

However, it is known that chrome has a higher hardness than stainless steel, which does not allow to obtain sliding surfaces having the same roughness of stainless steel. Therefore, a sliding bearing comprising a metal sliding surface obtained by chrome plating of a surface of one of its components is subject to wear faster than a corresponding bearing employing a metal sliding surface in the form of a plate made of a stainless steel.

For this reason, also in this case the standards require a service life reduction of the bearing, which is based on the maximum permissible sliding path as in the case of aluminum, and, according to the European standard EN 1337-2: 2004, is one fifth of the sliding path that characterizes a bearing having a stainless steel plate on equal polymeric material plate coupled thereto and operating conditions.

It is also known that a chrome plating is easily subject to the formation of cracks that result in the risk of corrosion of the underlying layers, i.e. the component of the bearing on the face of which of the coating is made. The manufacturing of a bearing component having a chrome plated sliding surface therefore requires extreme care both during assembly and installation of a bearing, because possible accidental nicks of the chrome plating, although extremely localized, expose the face of the component on which the chrome plating is made to corrosive attacks by atmospheric agents.

Therefore also this alternative configuration of a sliding bearing is disadvantageous from an economic point of view.

Finally, it is known that chrome plating processes are highly polluting, which makes this alternative configuration even less attractive.

There is therefore a need to find solutions for the manufacturing of sliding bearings which allow to overcome the drawbacks mentioned above, which is an object of the present invention.

It is also an object of this invention to provide sliding bearings whose metal sliding surfaces are easier and cheaper to manufacture than those currently required by the present standards.

Said object is achieved with a sliding bearing whose main features are set forth in claim 1, while other features are set forth in the remaining claims.

An idea of solution underlying the present invention is to make the metal sliding surface of a sliding bearing by forming a metal plating or coating on the face of the component intended to contact the sliding surface made of a polymeric material, and by manufacturing this component of the bearing by using carbon steel. This solution appears in fact the most suitable from a functional and manufacturing point of view, because it allows to solve the contact problems that characterize the stainless steel plates without penalizing the mechanical characteristics of the bearing components intended to withstand the loads, which are necessary to ensure an economically sustainable service life of the bearing.

It is also an idea of solution underlying the invention to make such a coating by aluminum or zinc plating, or respective alloys thereof. Aluminum and zinc in fact have a much lower hardness than chrome, which allows to obtain a roughness and maximum sliding paths that are comparable to those of a stainless steel surface on equal polymeric material plate coupled thereto and operating conditions.

An advantage provided by the invention is that an aluminum or zinc metal plating has a corrosion resistance comparable to that of stainless steel. In particular, when the thickness of the coating of aluminum, zinc or their respective alloys is higher than about 150 µm, upon oxidation of the outermost layer of the coating an oxide film is generated that adheres to the coated surface tenaciously and seals the porosities, thus protecting from corrosion the substrate on which the plating is formed. In this way, a coating of aluminum, zinc or their respective alloys helps to protect the surface of a carbon steel component of a bearing where the coating is formed much more effectively than chrome.

Moreover, aluminum and zinc have an anodic behavior compared to carbon, which implies that, even in the presence of porosities in the coating, or as a result of accidental scratches caused during assembly of the bearing in a factory, its installation, or its normal operation, the metal coating of aluminum, zinc or their respective alloys acts as a sacrificial anode that is oxidized in place of the underlying material, thus safeguarding the coated component of the bearing.

Another advantage offered by the invention is that aluminum and zinc have a much higher coefficient of thermal conductivity than stainless steel, which allows to obtain metal sliding surfaces featuring a high heat transfer ability. This is particularly advantageous when sliding bearings are used as anti-seismic supports.

Further features and advantages of the sliding bearing according to the present invention will be clear from the following description of embodiments thereof with reference to the attached drawings wherein:
- figure 1 is a front, partial cross-sectional view that schematically shows a sliding bearing not covered by the invention of a multidirectional flat type;
- figure 2 is a front, partial cross-sectional view that schematically shows a sliding bearing according to the invention of a combined flat/spherical type;
- figure 3 is a front, partial cross-sectional view that schematically shows a sliding bearing according to the invention of a sliding pendulum type.

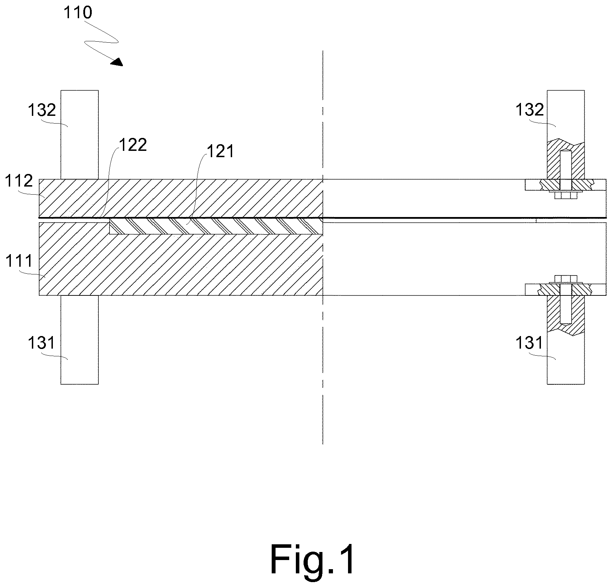

Referring to Figure 1, a sliding bearing not covered by the invention is generally indicated by reference numeral 110. The sliding bearing 110 comprises one first component and one second component, 111, 112, made of steel that are operatively connected to one another and configured to withstand a vertical load.

The first component 111 is intended to be connected to a supporting structure, e.g. to a pile of a bridge or to a foundation of a building or of an industrial plant, while the second component 112 is configured so as to be connected to an element intended to be placed on said supporting structure, for example a bay of the bridge deck, or a beam of the building or the industrial plant. In the illustrated embodiment, the connection of the bearing components to the supporting structure and to said element is e.g. accomplished by way of suitable feet or columns 131, 132 intended to be fitted and fixed in respective holes formed in these parts.

The bearing 110 further comprises at least one pair of sliding surfaces arranged between the first and the second components so as to allow relative translations thereof.

In the illustrated embodiment, the sliding bearing 110 e.g. comprises a single pair of sliding surfaces that are respectively indicated by reference numbers 121, 122.

The sliding surfaces 121, 122 are for example flat surfaces configured to allow relative movements between the first and the second components 111, 112 along a plurality of directions parallel to their contact plane. In an operating configuration, the contact plane is typically a horizontal plane.

One of the sliding surfaces, e.g. surface 121 in the illustrated embodiment, is a plate made of a polymeric material, for example PTFE. The plate may for example be fitted in a seat formed in the first component 111 as schematically shown in Figure 1, but it could be simply arranged on the first component 111 and fixed thereto by an adhesive.

The other sliding surface, e.g. surface 122 in the illustrated embodiment, is a metal surface associated with the second component 112. This metal surface is mirror polished by lapping.

The sliding metal surface is at least a portion of the face of one of the steel made components of the bearing facing the polymeric material plate associated with the other component, said portion being coated by a plating of aluminum, zinc or their respective alloys.

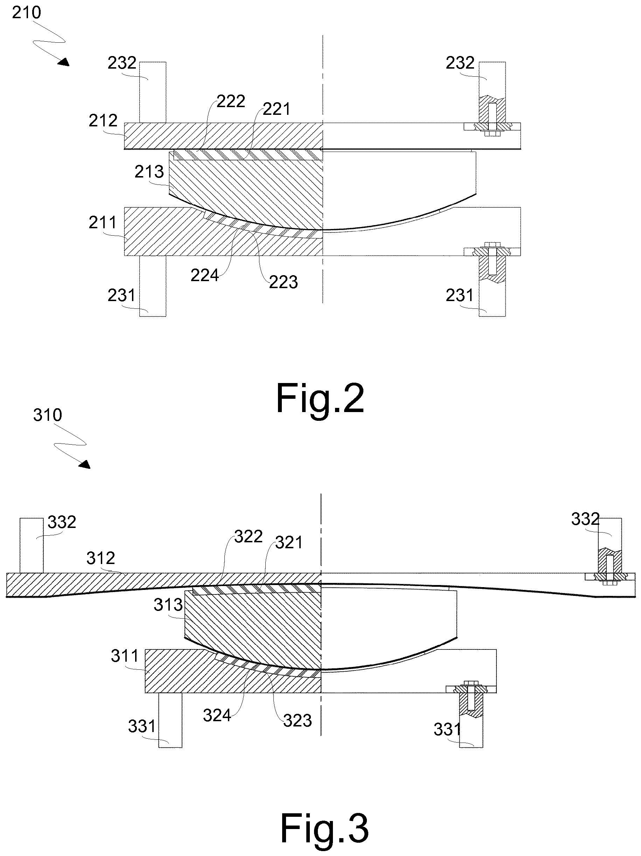

In Figure 1, as well as in Figures 2 and 3 that will be described later, the surface coating is schematically shown by way of a line that is thicker than those used for the other parts of the bearing.

It will be understood that for the purposes of the present invention it is completely immaterial that the sliding surface of polymeric material is associated with one between the first and the second components and that the sliding surface coated with aluminum, zinc or their respective alloys is a portion of the face of the other component. In an entirely equivalent way, the sliding surface made of polymeric material might be associated with the second component and the metal sliding surface coated with aluminum, zinc or their respective alloys could be formed on a portion of the face of the first component.

In the frame of the invention the assembly or anchoring mode of the polymeric material plate on the first or second components is also completely irrelevant.

The plating of aluminum, zinc or their respective alloys is carried out by way of a metallization process wherein the plating metal is heated up to its melting point, and then conveyed against the face of the component of the bearing to be coated by way of a gas stream.

In a preferred embodiment of the process, the metal material consisting of aluminum or zinc, or one of their corresponding alloys, is in the form of particles e.g. extracted from powders in bulk or of a wire, and is brought to the molten state by the heat produced from the combustion of a fuel gas, typically acetylene or propane, or by way of an electric arc triggered by a current typically ranging between 200 A and 400 A. A molten metal wire is pulverized by a jet of compressed air that thrusts the particles of molten metal at high speed against the portion of the face of the component of the bearing to be plated. Upon impact against the face of the bearing component to be coated, the metal particles are permanently integrated in its roughness, or among the particles of the coating metal that have been deposited previously. The process continues until the desired coating thickness is obtained.

When making the metal plating of aluminum, zinc or their respective alloys it is essential that the face of the bearing component to be coated is previously machined so as to obtain a roughness suitable to ensure a sufficient number of mechanical anchorage areas for the metal particles conveyed against it.

The metal coating according to the invention may advantageously be applied regardless of the size of the face of the bearing component to be coated, and is not limited to the size of an electrolytic bath as it instead occurs in the chrome plating processes allowed by the technical standards.

The coating layer may be made of commercially pure aluminum, i.e. 99.5% by weight, pure zinc, i.e. 99.99% by weight, or alternatively of aluminum or zinc alloys wherein the amount of aluminum or zinc is at least 80% by weight.

This allows to obtain service life sliding paths substantially corresponding to the sliding path characterizing a stainless steel plate on equal associated polymeric material plate and operating conditions, said sliding paths being measured in accordance with the standard EN 1337-2:2004.

In addition to the characteristics described above, these metals and their respective alloys are preferred because aluminum and zinc have an anodic behaviour when combined with carbon steel. In the presence of possible porosities, defects or damages in the coating that cause electroplating oxidation phenomena, the coating of aluminum, zinc or their respective alloys is oxidized in place of the underlying material, thus preserving the mechanical integrity of the bearing component on which the metal sliding surface is formed and which is intended to withstand the loads transmitted by the bearing.

Aluminum has an extremely low oxidation rate and in particular lower than that of zinc, hence the choice to make the coating by using commercially pure aluminum is preferred, because it advantageously allows eliminate corrosion problems of the metal bearing component also in presence of porosity or defects.

Non-limiting examples of materials that may be used for the metal coating of the face of the bearing component on which the metal sliding surface is formed are listed in the Table 1 below.

**Table 1**

| Symbolum | Alloy elements [weight percentage] | Other elements [weight percentage] |
|---|---|---|
| A199,5 | Al ≥ 99,5% | Total ≤ 0,5 |
| | | Si ≤ 0,3 |
| | | Fe ≤ 0,4 |
| | | Ti ≤ 0,05 |
| | | Cu ≤ 0,05 |
| | | Zn ≤ 0,07 |
| | | Mn ≤ 0,05 |
| | | Other ≤ 0,03 |
| Zn99,99 | Zn minimum 99,99 | Total ≤ 0,010 |
| | | Pb ≤ 0,005 |
| | | Cd ≤ 0,005 |
| | | Pb+Cd ≤ 0,006 |
| | | Sn ≤ 0,001 |
| | | Fe ≤ 0,003 |
| | | Cu ≤ 0,002 |
| | | Other ≤ 0,12 |
| AlMg5 | Mg 4,5-5,5 | Total ≤ 0,9 |
| | Mn 0-0,5 | Si ≤ 0,25 |
| | Cr 0-0,3 | Fe ≤ 0,40 |
| | Ti 0,10-0,25 | Cu ≤ 0,05 |
| | Al remaining | Zn ≤ 0,2 |
| | | Other 0,05 |
| ZnAl15 | Zn 84-86 | Total ≤ 0,17 |
| | Al 14-16 | Pb ≤ 0,005 |
| | | Cd ≤ 0,005 |
| | | Pb+Cd ≤ 0,006 |
| | | Sn ≤ 0,001 |
| | | Fe ≤ 0,05 |
| | | Cu ≤ 0,01 |
| | | Si ≤ 0,12 |

According to the invention, the thickness of the coating of aluminum, zinc or their respective alloys is comprised between 100 and 300 µm.

The thickness is preferably higher than about 150 µm for coatings made of aluminum and higher than about 200 µm for zinc coatings or coatings of aluminum or zinc alloys. By employing thicknesses higher than about 150 µm for aluminum coatings and higher than about 200 µm for coatings made of zinc or of aluminum or zinc alloys, in fact, oxidation of the outermost layers of the coating generates a metal oxide film that strongly adheres to the coating surface and seals the porosities, thus protecting against corrosion the substrate on which the coating is formed.

Experimental tests carried out by using sliding paths of about 10000m in combination with a sliding surface of PTFE under the same operating conditions set forth in the European standard EN 1337 -2: 2004 have allowed to verify that a surface coating of aluminum with a thickness between 150 and 200 µm allows to obtain friction coefficients corresponding to those tested and verified according to the same standard when employing a stainless steel surface in combination with a sliding surface of PTFE. In other words, the bearings according to the invention substantially have the same performance in terms of sliding path and friction coefficient of bearings employing a stainless steel plate coupled to the same low friction polymeric material surface.

Still through experimental tests it has been found that a metal coating according to the invention having a thickness as indicated above allows to obtain a corrosion resistance to salt spray of at least 1440 hours, that is equivalent to a corrosion resistance of industrial and marine class C5 and so-called "high" service life tested according to the standard ISO 12944. This makes the sliding bearing of the invention compliant with the current standards and allows to foresee its application alternatively to traditional bearings comprising metal sliding surfaces made of stainless steel.

The thickness of the coating may also be lower than about 150 µm for aluminum coatings and lower than about 200 µm for zinc coatings or coatings made of aluminum or zinc alloys. According to the invention in this case it is appropriate to treat the sliding surface coated with aluminum, zinc or their respective alloys with a low viscosity sealant, which penetrates into the porosities the coating and forms a permanent barrier against corrosion. Low viscosity sealants suitable for the present invention include e.g. vinyl sealants, epoxy resins containing coal tar (epoxy tar), aluminum pigmented epoxy resins, epoxy resins, phenolic resins containing oils, sealants based on aluminum pigmented silicone resins (silicone aluminum), sealants based on acrylic resins and silicones.

According to the invention, the low viscosity sealant may advantageously contain silicone lubricants so as to further reduce the friction coefficient during relative sliding of the pair of sliding surfaces of the bearing.

As described above, the metal sliding surface obtained by coating with aluminum, zinc or their respective alloys is at least a portion of the face of one of the components of the bearing facing the plate of polymeric material associated with the other component.

The surface plating of aluminum, zinc or their respective alloys may advantageously coat the whole face of the component, thus reducing the surface area that has to be covered by a corrosion protective paint as required by the present standards. This configuration is schematically shown in Figure 1, as well as in Figures 2 and 3 which will be described hereinafter.

The surface plating of aluminum, zinc or their respective alloys may even advantageously coat the whole component of the bearing, which is thus protected from corrosion without the need of any additional operation of corrosion protection painting.

It will be understood that the present invention is not limited to bearings of the multidirectional flat type, but may be applied to other types of sliding bearings, such as the mono and bi-directional flat type sliding bearings, wherein not only the sliding surfaces intended to bear vertical loads, but also those designed to withstand transverse loads may include a first sliding surface made of a polymeric material or of a special composite material containing PTFE, that is described by the technical standards, and a second metal sliding surface formed by a metal substrate coated with aluminum, zinc or their respective alloys.

Furthermore, it will be understood that the present invention relates to bearings having curved sliding surfaces, for example spherical bearings or combined flat/spherical bearings such as that shown in Figure 2.

Similarly to the bearing shown in Figure 1, also in this case the bearing 210 includes a first component 211, adapted to be connected to a supporting structure, for example a bridge pile, and a second component 212 adapted to be connected to an element intended to be placed on said supporting structure, for example a girder of the bridge deck. Moreover, as in the bearing of Figure 1, the connection to the supporting structure and the element is accomplished by way of suitable feet or columns 231, 232 intended to be fitted and fixed in holes formed in these parts.

The bearing 210 further comprises a third steel made component 213 arranged between the first component 211 and the second component 212.

The face of the third component 213 facing the first component 211 has a convex shape and is configured so as to be engaged with a corresponding concave surface formed in the first component 211.

The face of the third component 213 facing the second component 212 is flat and is configured to contact a corresponding flat surface of the second component 212.

The sliding bearing shown in Figure 2 comprises two pairs of sliding surfaces respectively indicated with reference numbers 221, 222 and 223, 224 and arranged one between the first and the third components and the other between the second and the third components. For each pair, a sliding surface is a plate of polymeric material mounted on one between the first and third or between the first and the second components of the bearing, while the other sliding surface is at least a portion of the face of the other steel component facing the polymeric material plate, a coating of aluminum, zinc or their respective alloys being formed on said portion.

The sliding surfaces 221, 222 are flat, namely a plate of polymeric material fitted in a seat formed in the third component 213 and the flat face of the second component 212 coated with aluminum, zinc or their respective alloys. The sliding surfaces 223, 224 are curved spherical or cylindrical surfaces, namely a polymeric material plate fitted in a concave seat formed in the first component 211 and the convex face of the third component 213 coated with aluminum, zinc or their respective alloys.

The present invention may also be advantageously applied to sliding pendulum type bearings that have an anti-seismic supporting function for bridges, buildings and industrial plants.

Referring to Figure 3, as in the previous examples the bearing 310 comprises a first component 311, adapted to be connected to a supporting structure, e.g. a bridge pile, and a second component 312, adapted to be connected to an element intended to be placed on the supporting structure, for example a girder of the bridge deck.

Moreover, as in the previous examples, connection to the supporting structure and to the element is achieved by way of suitable feet or columns 331, 332 intended to be fitted and fixed in holes formed in these parts.

The bearing 310 further comprises a third component 313 arranged between the first component 311 and the second component 312. The face of the third component 313 facing the first component 311 has a convex shape and is intended to be engaged with a corresponding concave surface of the first component 311. The face of the third member 313 facing the second component 312 also has a convex shape and is intended to be engaged with a corresponding concave surface of the second component 312.

The bearing 310 comprises two pairs of sliding surfaces that are indicated by reference numerals 321, 322 and 323, 324 and are arranged on one between the first and the third components and on the other one between the second and the third components, respectively. For each pair, a sliding surface is a polymeric material plate mounted on one between the first and third or between the first and the second components of the bearing, while the other sliding surface is at least a portion of the face of the other component facing the polymeric material plate, said portion being plated by a surface coating of aluminum, zinc or their respective alloys.

The sliding surfaces 321, 322 are curved spherical or cylindrical surfaces and are respectively a polymeric material plate fitted in a seat formed in the third component 313 and the face of the second component 312 coated with aluminum, zinc or their respective alloys. The sliding surfaces 323, 324 are also curved, spherical or cylindrical surfaces, namely a polymeric material plate fitted in a concave seat formed in the first component 311 and the convex face of the third component 313 coated with aluminum, zinc or their respective alloys.

It is known that due to the sliding of convex surfaces on the concave surfaces of a bearing of this type, a supported structure oscillates increasing and decreasing its potential energy according to the laws of motion of a pendulum, whose natural period is determined by the radius of the concave surface. The radius of the concave surfaces is chosen so as to bring the natural period of the pendulum to optimal values for the reduction of the seismic response of the supported structure. A certain amount of kinetic energy is dissipated through the friction that characterizes the sliding surfaces, thus further reducing the seismic response of the supported structure.

The kinetic energy transformed into thermal energy due to friction must be dissipated in the form of heat as efficiently as possible through the parts in contact. Since polymeric materials generally have low heat transfer coefficients, for example in the order of 0.2 to 0.6 W/(m · K), sliding surfaces made of these materials behave essentially as thermal barriers. Moreover, polymeric materials are subject to degradation at the high temperatures resulting from friction. Heat dissipation is thus mainly performed by the metal sliding surfaces.

In the case of a plain bearing of a traditional type, wherein the metal sliding surface is a plate of stainless steel and the component on which it is mounted is made of carbon steel, the coefficient of thermal conductivity is about 15 W/(m · K) for stainless steel and about 65 W/(m · K) for carbon steel. Therefore, stainless steel shows a relatively insulating behavior with respect to the underlying component made of carbon steel.

By using a bearing according to the present invention, a metal sliding surface made of commercially pure aluminum at 99.5% by weight has a heat transfer coefficient of about 220 W/(m · K), hence much higher than that of carbon steel, and in contrast to the latter, promotes transmission of the thermal energy in the form of heat to the underlying carbon steel component of the sliding bearing.

Similarly, a sliding surface made of metal zinc of 99.99% by weight has a heat transfer coefficient of about 110 W/(m · K), therefore also in this case higher than that of stainless steel and such as to promote the transmission of the thermal energy in the form of heat to the underlying carbon steel component of the sliding bearing.

The same condition is achieved by employing aluminum or zinc alloys such as those described in Table 1, and more generally aluminum or zinc alloys wherein the amount of aluminum or the amount of zinc is at least 80% by weight.

Hence, on equal configuration and operating conditions, a bearing of the sliding pendulum type according to the invention allows to dissipate heat much more efficiently than a conventional sliding pendulum bearing, while preserving over time the properties of the material forming the polymeric material plate.

The present invention has hereto been described with reference to preferred embodiments thereof. It is understood that there may be other embodiments based on the same inventive idea, as defined by the scope of protection of the claims set forth below.

## Claims

1. A sliding bearing (210; 310) for structural engineering applications, said sliding bearing (210; 310) comprising at least one first component and one second component (211, 213; 311, 312, 313) made of steel that are operatively connected to one another and configured to withstand a vertical load, as well as at least one pair of mating curved sliding surfaces (223, 224; 321, 322, 323, 324) arranged between said first and second components in order to allow relative displacements and/or rotations thereof,
wherein one of the curved sliding surfaces (223; 321, 323) of the pair is a plate made of a polymeric material mounted on one between the first and the second components and the other one of the curved sliding surfaces (224; 322, 324) is a metal surface, wherein said curved metal surface is at least a portion of the face of the other steel made component facing said polymeric material plate, **characterized in that** on said curved metal surface a surface coating is formed, said surface being coated by a plating of aluminum, zinc or respective alloys thereof.

2. A sliding bearing (210; 310) according to claim 1, wherein said surface coating is made of pure aluminum at 99,5 % by weight.

3. A sliding bearing (210; 310) according to claim 1, wherein said surface coating is made of pure zinc at 99.99% by weight.

4. A sliding bearing (210; 310) according to claim 1, wherein said surface coating is made of an aluminum alloy or a zinc alloy wherein the amount of aluminum or the amount of zinc is at least 80% by weight.

5. A sliding bearing (210; 310) according to any one of claims 1 to 4, wherein the surface coating has a thickness between 100 and 300 µm.

6. A sliding bearing (210; 310) according to claim 5, wherein said thickness is higher than 150 µm for aluminum coatings and higher than 200 µm for zinc coatings or for coatings made of aluminum alloys or zinc alloys.

7. A sliding bearing (210; 310) according to claim 5, wherein said thickness is lower than 150 µm for aluminum coatings and lower than 200 µm for zinc coatings or made of aluminum or zinc alloys and wherein the coating is treated with a sealing material having a low viscosity.

8. A sliding bearing (210; 310) according to claim 7, wherein the low viscosity sealing material with which the surface coating of aluminum, zinc or their respective alloys is treated comprises silicone lubricants.

9. A sliding bearing (210; 310) according to any one of claims 1 to 8, wherein the surface coating of aluminum, zinc or their respective alloys is formed on the whole surface of the component facing the plate made of polymeric material.

10. A sliding bearing (210; 310) according to any one of claims 1 to 9, wherein the surface coating of aluminum, zinc or their respective alloys is formed on the whole component on which the sliding metal surface is formed.

11. A sliding bearing (210; 310) according to any one of claims 1 to 10, further comprising a third component (213; 313) arranged between said first component (211; 311) and second component (212; 312) and operatively connected thereto, a first pair of sliding surfaces (221, 222; 321, 322) being arranged between said first and third components and a second pair of sliding surfaces being arranged between said second and third components, and wherein for each pair of mating curved sliding surfaces, one of the sliding surfaces is a plate made of a polymeric material mounted on one of the components and the other sliding surface is a metal surface consisting of at least a portion of the surface of the other component facing the polymeric material plate, a surface coating made of a plating of aluminum, zinc or their respective alloys being formed on said portion.

12. Use of a surface coating made of a plating of aluminum, zinc or their respective alloys for coating at least a portion of a machined curved surface of a component of a sliding bearing (210; 310) for structural engineering applications, the coated surface portion so obtained being intended to form a curved sliding metal surface to be coupled with a mating curved sliding surface made of a polymeric material.

## Patentansprüche

1. Ein Gleitlager (210; 310) für Anwendungen im konstruktiven Ingenieurbau, wobei das besagte Gleitlager (210; 310) eine erste und eine zweite Komponente (211, 213; 311, 312, 313) aus Stahl aufweist, welche wirktechnisch miteinander verbunden und derart ausgelegt sind, dass sie einer Vertikalbelastung widerstehen, sowie wenigstens ein Paar von zusammenpassenden, gekrümmten Gleitflächen (223, 224; 321, 322, 323, 324), welche zwischen den besagten, ersten und zweiten Komponenten angeordnet sind, um relative Verschiebungen und/oder Rotationen derselben zu ermöglichen,
wobei eine der gekrümmten Gleitflächen (223; 321, 323) dieses Paares durch eine Platte aus einem Polymerwerkstoff gebildet ist, die an einer von der ersten und der zweiten Komponente befestigt ist, und wobei die andere der gekrümmten Gleitflächen (224; 322, 324) eine Metalloberfläche ist,
wobei die besagte, gekrümmte Metalloberfläche wenigstens ein Teil der Oberfläche der anderen Komponente aus Stahl ist, welche der Platte aus Polymerwerkstoff zugewandt ist,
**dadurch gekennzeichnet, dass**
auf der besagten, gekrümmten Metalloberfläche eine Oberflächenbeschichtung gebildet ist, wobei die Oberfläche mit einem Überzug aus Aluminium, Zink oder deren entsprechenden Legierungen beschichtet ist.

2. Ein Gleitlager (210; 310) nach Anspruch 1, wobei die besagte Oberflächenbeschichtung aus reinem Aluminium von 99,5 Gew.-% besteht.

3. Ein Gleitlager (210; 310) nach Anspruch 1, wobei die besagte Oberflächenbeschichtung aus reinem Zink von 99,99 Gew.-% besteht.

4. Ein Gleitlager (210; 310) nach Anspruch 1, wobei die besagte Oberflächenbeschichtung aus einer Aluminiumlegierung oder einer Zinklegierung besteht, wobei der Anteil des Aluminiums oder der Anteil des Zinks bei wenigstens 80 Gew.-%liegt.

5. Ein Gleitlager (210; 310) nach einem der Ansprüche 1 bis 4, wobei die Oberflächenbeschichtung eine Dicke zwischen 100 und 300 µm aufweist.

6. Ein Gleitlager (210; 310) nach Anspruch 5, wobei die Dicke größer ist als 150 µm für Aluminiumbeschichtungen, und größer als 200 µm für Zinkbeschichtungen oder für Beschichtungen aus Aluminiumlegierungen oder Zinklegierungen.

7. Ein Gleitlager (210; 310) nach Anspruch 5, wobei die Dicke kleiner ist als 150 µm für Aluminiumbeschichtungen, und kleiner als 200 µm für Zinkbeschichtungen oder solche aus Aluminium- oder Zinklegierungen, und wobei die Beschichtung mit einem Versiegelungsmaterial von geringer Viskosität behandelt ist.

8. Ein Gleitlager (210; 310) nach Anspruch 7, wobei das Versiegelungsmaterial von geringer Viskosität, mit welchem die Oberflächenbeschichtung aus Aluminium, Zink oder deren entsprechenden Legierungen behandelt wurde, Silikongleitmittel umfasst.

9. Ein Gleitlager (210; 310) nach einem der Ansprüche von 1 bis 8, wobei die Oberflächenbeschichtung aus Aluminium, Zink oder deren entsprechenden Legierungen auf der gesamten Oberfläche der Komponente aufgebracht ist, die der Platte aus Polymerwerkstoff zugewandt ist.

10. Ein Gleitlager (210; 310) nach einem der Ansprüche 1 bis 9, wobei die Oberflächenbeschichtung aus Aluminium, Zink oder deren entsprechenden Legierungen auf der gesamten Komponente aufgebracht ist, an welcher die metallische Gleitfläche ausgebildet ist.

11. Ein Gleitlager (210; 310) nach einem der Ansprüche 1 bis 10, ferner umfassend eine dritte Komponente (213; 313), die zwischen der besagten, ersten Komponente (211; 311) und der zweiten Komponente (212; 312) angeordnet und mit jenen wirkungstechnisch verbunden ist, wobei ein erstes Paar von Gleitflächen (221, 222; 321, 322) zwischen den besagten, ersten und dritten Komponenten angeordnet ist, und wobei ein zweites Paar von Gleitflächen zwischen den besagten, zweiten und dritten Komponenten angeordnet ist, und wobei für jedes Paar von zusammenpassenden, gekrümmten Gleitflächen eine der Gleitflächen eine Platte aus Polymerwerkstoff ist, die auf einer der Komponenten befestigt ist, und wobei die andere Gleitfläche eine Metalloberfläche ist, die aus wenigstens einem Teil der Oberfläche der anderen Komponente ist, welche der Platte aus Polymerwerkstoff zugewandt ist, wobei eine Oberflächenbeschichtung aus einem Überzug aus Aluminium, Zink oder entsprechenden Legierungen besteht, der auf diesem Bereich aufgebracht ist.

12. Verwendung einer Oberflächenbeschichtung, bestehend aus einem Überzug aus Aluminium, Zink oder deren entsprechenden Legierungen, für die Beschichtung wenigstens eines Bereichs einer bearbeiteten, gekrümmten Oberfläche einer Komponente eines Gleitlagers (210; 310) für Anwendungen im konstruktiven Ingenieurbau, wobei der solchermaßen erhaltene, beschichtete Oberflächenbereich für die Bildung einer gekrümmten, metallischen Gleitfläche gedacht ist, die mit einer zusammenpassenden, gekrümmten Gleitfläche aus Polymerwerkstoff zu koppeln ist.

## Revendications

1. Palier lisse (210 ; 310) pour applications de construction civile, ledit palier lisse (210 ; 310) comprenant au moins un premier composant et un second composant (211, 213 ; 311, 312, 313) réalisés à partir d'acier qui sont raccordés, de manière opérationnelle, l'un à l'autre et configurés pour résister à une charge verticale, ainsi qu'au moins une paire de surfaces de couplage coulissantes incurvées (223, 224 ; 321, 322, 323, 324) agencées entre lesdits premier et second composants afin de permettre leurs déplacements et/ou rotations relatifs,
dans lequel l'une des surfaces coulissantes incurvées (223 ; 321, 323) de la paire est une plaque réalisée à partir d'un matériau polymère monté sur l'un entre le premier et le second composant et l'autre parmi les surfaces coulissantes incurvées (224 ; 322, 324) est une surface métallique,
dans lequel :
ladite surface métallique incurvée est au moins une partie de la face de l'autre composant en acier faisant face à ladite plaque en matériau polymère,
**caractérisé en ce que** :
sur ladite surface métallique incurvée, on forme un revêtement de surface, ladite surface étant recouverte par un placage d'aluminium, de zinc ou de leurs alliages respectifs.

2. Palier lisse (210 ; 310) selon la revendication 1, dans lequel ledit revêtement de surface est réalisé avec de l'aluminium pur à 99,5 % en poids.

3. Palier lisse (210 ; 310) selon la revendication 1, dans lequel ledit revêtement de surface est réalisé avec du zinc pur à 99,99 % en poids.

4. Palier lisse (210 ; 310) selon la revendication 1, dans lequel ledit revêtement de surface est réalisé avec un alliage d'aluminium ou un alliage de zinc, dans lequel la quantité d'aluminium ou la quantité de zinc est d'au moins 80 % en poids.

5. Palier lisse (210; 310) selon l'une quelconque des revendications 1 à 4, dans lequel le revêtement de surface a une épaisseur comprise entre 100 et 300 µm.

6. Palier lisse (210; 310) selon la revendication 5, dans lequel ladite épaisseur est supérieure à 150 µm pour les revêtements en aluminium et supérieure à 200 µm pour les revêtements en zinc ou pour les revêtements réalisés à partir d'alliages d'aluminium ou d'alliages de zinc.

7. Palier lisse (210; 310) selon la revendication 5, dans lequel ladite épaisseur est inférieure à 150 µm pour les revêtements en aluminium et inférieure à 200 µm pour les revêtements en zinc ou réalisée à partir d'alliages d'aluminium ou de zinc, dans lequel le revêtement est traité avec un matériau d'étanchéité ayant une faible viscosité.

8. Palier lisse (210 ; 310) selon la revendication 7, dans lequel le matériau d'étanchéité à faible viscosité avec lequel le revêtement de surface en aluminium, en zinc ou avec leurs alliages respectifs est traité, comprend des lubrifiants de silicone.

9. Palier lisse (210; 310) selon l'une quelconque des revendications 1 à 8, dans lequel le revêtement de surface en aluminium, en zinc ou avec leurs alliages respectifs est formé sur la totalité de la surface du composant faisant face à la plaque réalisée à partir de matériau polymère.

10. Palier lisse (210; 310) selon l'une quelconque des revendications 1 à 9, dans lequel le revêtement de surface en aluminium, en zinc ou avec leurs alliages respectifs, est formé sur la totalité du composant sur lequel la surface métallique coulissante est formée.

11. Palier lisse (210; 310) selon l'une quelconque des revendications 1 à 10, comprenant en outre un troisième composant (213 ; 313) agencé entre ledit premier composant (211 ; 311) et le deuxième composant (212 ; 312) et raccordé de manière opérationnelle à ces derniers, une première paire de surfaces coulissantes (221, 222; 321, 322) étant agencée entre lesdits premier et troisième composants et une seconde paire de surfaces coulissantes étant agencée entre lesdits deuxième et troisième composants, et dans lequel pour chaque paire de surfaces de couplage coulissantes incurvées, l'une des surfaces coulissantes est une plaque réalisée à partir d'un matériau polymère montée sur l'un des composants et l'autre surface coulissante est une surface métallique se composant d'au moins une partie de la surface de l'autre composant faisant face à la plaque en matériau polymère, un revêtement de surface réalisé à partir d'un placage d'aluminium, de zinc ou de leurs alliages respectifs, étant formé sur ladite partie.

12. Utilisation d'un revêtement de surface réalisé avec un placage d'aluminium, de zinc ou de leurs alliages respectifs pour recouvrir au moins une partie d'une surface incurvée usinée d'un composant d'un palier lisse (210 ; 310) pour les applications de construction civile, la partie de surface recouverte ainsi obtenue étant prévue pour former une surface métallique coulissante incurvée destinée à être couplée avec une surface de couplage coulissante incurvée réalisée à partir d'un matériau polymère.
